# EUROPEAN PATENT SPECIFICATION

(11) **EP 1 941 697 B1**
(45) Date of publication and mention of the grant of the patent: **10.11.2010**
(21) Application number: 06795930.4
(22) Date of filing: 06.09.2006
(51) Int. Cl.: H04W 12/10, H04L 29/06

(54) **METHOD AND MOBILITY ANCHOR POINT FOR AUTHENTICATING UPDATES FROM A MOBILE NODE**
VERFAHREN UND MOBILITÄTSANKERPUNKT ZUM AUTHENTIFIZIEREN VON AKTUALISIERUNGEN EINES MOBILKNOTENS
PROCEDE ET POINT D'ANCRAGE DE MOBILITE DESTINES A AUTHENTIFIER DES MISES A JOUR PROVENANT D'UN NOEUD MOBILE

(30) Priority: 20.09.2005 US 718325 P; 28.10.2005 US 730826 P; 06.03.2006 US 778903 P
(43) Date of publication of application: 09.07.2008
(73) Proprietor: Telefonaktiebolaget LM Ericsson (publ), 164 83 Stockholm (SE)
(72) Inventor: HADDAD, Wassim, S-16731 Bromma (SE)
(74) Representative: Pfeifer, Torsten
(86) International application number: PCT/IB2006/053138
(87) International publication number: WO 2007/034345

(56) References cited:
- US-A1- 2004 205 211
- FENG BAO ROBERT DENG YING QIU JIANYING ZHOU: "Certificate-based Binding Update Protocol (CBU)" IETF STANDARD-WORKING-DRAFT, INTERNET ENGINEERING TASK FORCE, IETF, CH, no. 3, 8 March 2005 (2005-03-08), XP015039577 ISSN: 0000-0004

## Description

### Background of the invention

### Field of the invention

The present invention relates to a method and a Mobility Anchor Point for authenticating binding updates received at the Mobility Anchor Point from a Mobile Node in a mobile network.

### Description of the Related Art

The following paragraphs introduce some concepts that are required to understand the problem addressed hereinbelow.

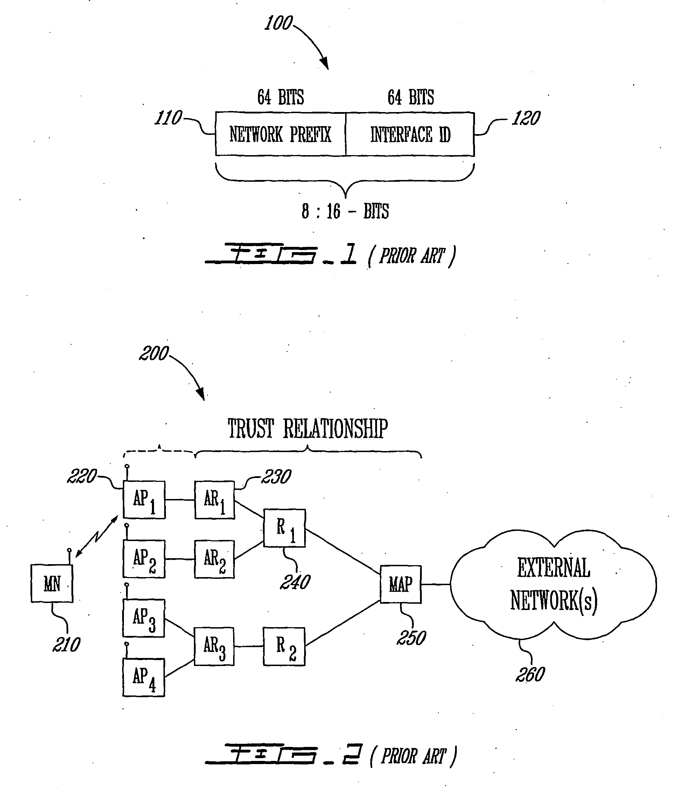

Internet Protocol version 6 (IPv6) addresses comprise 128 bits and are formed of eight (8) 16-bit elements. Many devices use unicast IPv6 addresses 100, as shown on Figure 1, these IPv6 addresses being redefined as comprising two (2) 64-bit halves. A first half of an IPv6 address assigned to a device, such as to a Mobile Node (MN) comprises a network prefix 110, which is allocated to the device by a network node that the device is communicating with. A second half of the IPv6 address is generally self assigned by the device. The second half is known as an interface identifier 120 for the device. Interface identifiers 120 in IPv6 unicast addresses are used to identify interfaces on a link. They are required to be unique on that link in order to ensure that no two IPv6 address will comprise the same interface identifier 120 along with the same network prefix. In many cases an interface identifier 120 is generated from the device interface's link-layer address, also called Media Access Control (MAC) address.

A Cryptographically Generated Address (CGA) is an IPv6 address for which the interface identifier 120 differs from any actual link-layer interface of the device, but is rather generated by computing a one-way hash function of a CGA public key of the device along with an auxiliary parameter such as, for instance, a random number.

A Crypto-based Identifier (CBID) is a 128-bit non routable identifier derived from hashing a public key of a device, and a 64-bit imprint, which may be, for example, a 64-bit random number. CBIDs are sometimes used in lieu of IPv6 addresses in some IPv6 messages, when no routing based on such addresses is needed.

The document US2004/205211 A1 (TAKEDA y et al) identifies a method of authentication and update message received at a MAP from a mobile node, MN, in a network. This comprises receiving at the MAP from the MN the update message comprising a Local-Care of Address and a Regional-Care of Address and authenticating the received binding update data and if the authentication result is positive, staring the LCoA and the RCoA in the table entry.

Diffie-Hellman (DH) key exchange is a cryptographic protocol which allows two parties that have no prior knowledge of each other to jointly establish a shared secret key over an insecure communications channel, US 4200770 (HELLMAN, DIFFIE, MERKLE).

A problem that exists in packet-based mobile communication networks relates to a lack of authentication between Mobile Nodes (MN) and some elements of a local network serving the MNs. The lack of authentication may provide an opportunity for a malicious node to obtain service normally intended to a legitimate MN. This may be the case, for example, in Hierarchical Mobile IPv6 (HMIPv6) networks, which allow the establishment of sessions between MNs roaming within a local network with Correspondent Nodes (CN) located in external networks. Figure 2 is a representation of a conventional HMIPv6 network 200, which is an example of a local network. The HMIPv6 network 200 is shown comprising one MN 210, but the network would normally comprise a large plurality of such MNs 210. The HMIPv6 network 200 further comprises several Access Points (AP) 220, Access Routers (AR) 230 and at least one Mobility Anchor Point (MAP) 250. The ARs 230 and the MAP 250 may communicate through routers 240. The APs 220 and the ARs 230 may be combined in single nodes, or may be implemented in distinct nodes. External networks 260, comprising CNs (not shown), are not part of the HMIPv6 network 200.

The MN 210 may freely move around, or roam, between the coverage of the various AP 220 and obtain service therefrom. When the MN 210 connects with one of the AP 220, called serving AP, through a radio link, the MN 210 generally select the one AP 220 that is in closest proximity. In order to communicate within the HMIPv6 network 200, the MN 210 obtains a network prefix from the AR 230 connected to the serving AP 220. By use of the network prefix of the AR 230, the MN 210 configures an IPv6 address called Local Care-of Address (LCoA), also sometimes called on-link Care-of Address. The LCoA is used between the MN 210 and the AR 230 for addressing the MN 210. The LCoA may be CGA-generated. In order to communicate within the HMIPv6 network 200 beyond the AR 230, the MN 210 configures a Regional Care-of Address (RCoA), which is also an IPv6 address, by use of a network prefix of the MAP 250. The RCoA may also be CGA-generated.

In order to ensure that the MN 210 may communicate within the HMIPv6 network 200, it needs to request that the MAP binds the LCoA and the RCoA. Binding these two addresses implies that the MAP stores both addresses in an internal table entry, called Binding Cache Entry (BCE), and uses this table to associate regional and local addresses. In the event that the MN 210 moves from a first AR 230 to a second AR 230, it configures a new LCoA by use of a network prefix of the second AR 230. It then needs to request that the MAP binds the new LCoA with the RCoA already stored in the BCE.

A malicious node located within the HMIPv6 network 200 might attempt to establish another, invalid relationship between the RCoA and an illegitimate LCoA. The malicious node could in this way steal information intended for the MN 210, or simply get access to service normally paid for by a user of the MN 210. There would thus be clear advantages of having a method and a MAP for securely authenticating binding update requests received at the Mobility Anchor Point from a Mobile Node in a mobile network.

### Summary of the Invention

It is therefore a broad object of this invention to provide a method and a Mobility Anchor Point (MAP) for authenticating updates received from a Mobile Node (MN) at the MAP in a local network.

A first aspect of the present invention is directed to a method for authenticating a binding update received from a MN at a MAP. The MAP receives from the local network, for example from an Access Router (AR), a first message, named a pre-binding, comprising a public key of the MN (MNK+), a Local Care-of Address (LCoA) of the MN and a Crypto-Based Identifier (CBID) of the MN. The MAP creates an entry in an internal table to store information elements received in the first message, wherein the LCoA may be used as a pointer to locate the entry within the table. The MAP then receives a second message, named an update, received directly from the MN, and comprising a Regional Care-of Address (RCoA) of the MN along with the LCoA. The MAP locates the table entry by use of the LCoA. It then hashes an interface identifier, which forms a part of the RCoA, with the MNK+. It then compares a result of the hashing with the CBID. If the comparison fails, the second message is ignored. If the comparison is successful, the update is authenticated. The MAP stores the RCoA in the table entry, alongside with the LCoA, thereby binding the LCoA with the RCoA.

A second aspect of the present invention is directed to a variant of the method described hereinabove, wherein the MNK+, received in the first message, is used as a pointer to locate the table entry in the MAP. The first message also comprises a Key secret (Ks), which is stored in the table entry. The second message comprises the MNK+, and both the LCoA and the RCoA. The MAP locates the table entry by use of the MNK+ received in the second message. The MAP hashes the Ks with the MNK+. It then compares a result of the hashing with interface identifiers forming parts of the LCoA and of the RCoA. If the comparison is successful, the MAP binds the LCoA with the RCoA in its table entry.

A third aspect of the present invention is directed to an optional extension of the methods described hereinabove, wherein, following binding of the LCoA with the RCoA, the MAP generates a Security Association Key (SAK) for the MN. The MAP then sends to the MN a Hint based on the SAK, to enable the MN to generate its own copy of the SAK. Subsequent messages exchanged between the MN and the MAP are authenticated by use of the SAK.

A fourth aspect of the invention is directed to the methods described hereinabove, wherein defining the Hint comprises encrypting the SAK.

A fifth aspect of the invention is directed to an alternative aspect of the methods described hereinabove, wherein the second message further comprises a Diffie-Hellman (DH) public value of the MN (DHMN+), the MAP having both a DH public value (DHMAP+) and a DH private value (DHMAP-), the SAK being computed in the MAP using the DHMN+ and the DHMAP-, and wherein defining the Hint comprises defining the DHMAP+.

A sixth aspect of the present invention is directed to a MAP for authenticating binding updates received from a MN, comprising an input port for receiving messages, a memory for storing binding table entries, a processor for executing hashing and matching algorithms, and a logic unit for deciding on the acceptance or refusal of binding updates messages.

### Brief description of the Drawings

For a more detailed understanding of the invention, for further objects and advantages thereof, reference can now be made to the following description, taken in conjunction with the accompanying drawings, in which:

Figure 1 (prior art) shows a unicast IPv6 address;

Figure 2 (prior art) is a representation of a conventional HMIPv6 network;

Figures 3a, 3b and 3c show a sequence diagram of a first exemplary method for authenticating an update message;

Figures 4a, 4b and 4c show a sequence diagram of a second exemplary method for authenticating an update message; and

Figure 5 shows an exemplary Mobility Anchor Point built according to the present invention.

### Detailed Description

The innovative teachings of the present invention will be described with particular reference to various exemplary uses and aspects of the preferred embodiments. However, it should be understood that these embodiments provide only a few examples of the many advantageous uses of the innovative teachings of the invention. In general, statements made in the specification of the present application do not necessarily limit any of the various claimed aspects of the present invention. Moreover, some statements may apply to some inventive features but not to others. In the description of the figures, like numerals represent like elements of the invention.

The present invention provides a method and a Mobility Anchor Point (MAP) for authenticating a binding update request received from a Mobile Node (MN). In order for the MN to establish a session with a far-end Correspondent Node (CN), it first needs to access a local network such as the one shown on Figure 2, preferably through an Access Router (AR). In order to let a MN move around between various ARs in close proximity within the local network, the MAP is used as a fixed link for the local network towards external networks comprising CNs. The MN needs to configure the LCoA to communicate locally with the AR, and the RCoA which will be used within the local network comprising one or a plurality of ARs, some routers, and the MAP. The MAP is the node function where the LCoA and the RCoA are bound together. While a trusted relationship is normally expected to exist between the ARs and the MAP, oftentimes extending up to the Access Points (AP), there is no a priori secure relationship between the MN and the MAP. Authentication of updates received at the MAP from the MN will prevent any malicious node from sending messages to one of these nodes on behalf of the other one. The present invention provides that a first message is sent from within the local network towards the MAP, comprising a cryptographic public key of the MN, a first pointer representative of the MN and a first comparison data, also representative of the MN. In a preferred embodiment, the first message is sent to the MAP by the AR that is currently serving the MN. The MAP creates for the MN an entry in an internal table to store information elements received in this first message. The MN later sends a second message towards the MAP. The second message comprises the LCoA and the RCoA, a second pointer and a second comparison data. The MAP uses the second pointer to locate in its internal table the entry for the MN. The MAP then hashes one of the comparison data with the cryptographic public key of the MN and compares the result with the other one of the comparison data. If there is a positive match, this is a proof that the MN is indeed the one for which the local network had sent the first message. The second message now being authenticated, the MAP binds the LCoA with the RCoA by storing both addresses in the same table entry. The MAP 250 preferably sends an acknowledgement message towards the MN. Later, as the MN may move between ARs, it may obtain a new LCoA and the MN needs to request the MAP to bind the new LCoA with the RCoA. The same authentication method may be used for this new binding request.

Optionally, the present invention provides for the establishment of a bidirectional security association between the MN and the MAP. In this case, messages exchanged between the two nodes after the first binding event can be securely authenticated by use of a Security Association Key (SAK) known to no other party in the network. More specifically, messages such as subsequent update messages, used by the MN to request that the MAP binds the new LCoA with the RCoA, are advantageously authenticated by use of the SAK. Under this option, the MAP generates the SAK after binding the LCoA and the RCoA. The SAK is preferably not sent to the MN as is, without protection, in order to prevent any malicious node from eavesdropping on this information. Instead, the MAP defines a Hint, which comprises information that is sufficient for the MN to compute a copy of the SAK. The Hint is sent towards the MN in the acknowledgement message. The MN may then compute its own copy of the SAK. Thereafter, both the MN and the MAP may use the SAK to authenticate further messages.

In the context of the present invention, the MN may comprise a mobile cellular telephone, a personal assistant, a laptop computer and the like. The MN may receive service from more than one AR, and thereby have more than one LCoA and more than one RCoA. The MAP may be implemented on any general computer platform, on a router platform, or on any suitable platform capable of Internet communication. The local network may comprise one or more MAPs, each MAP being capable of binding a LCoA and RCoA pair for the MN. The AR is generally a generic router connected directly to an AP. The AP and the AR are oftentimes combined in a single unit. The MNs and the APs may connect through a cellular link, a wireless local area network link, a cable link, and the like.

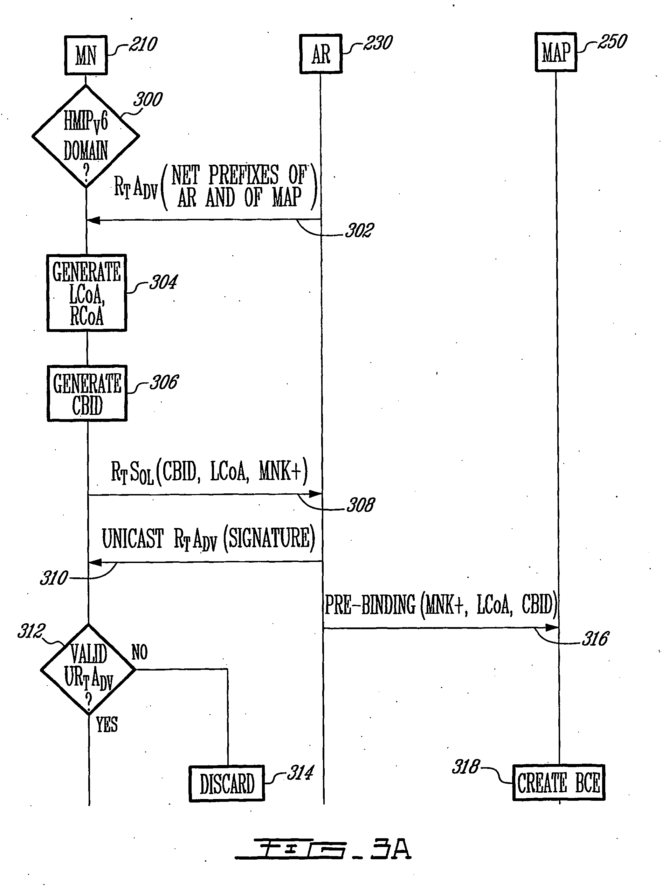

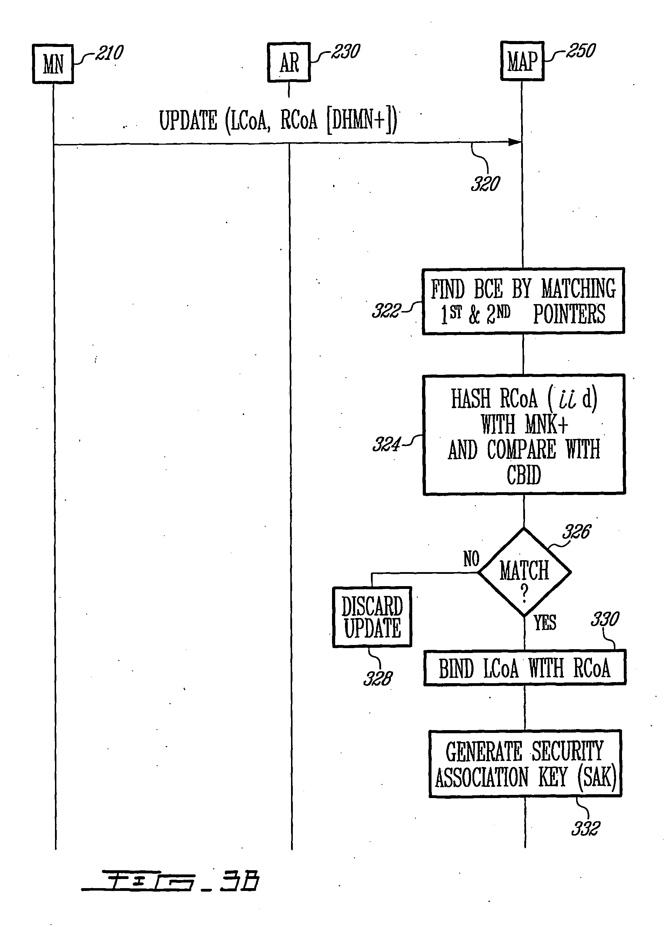

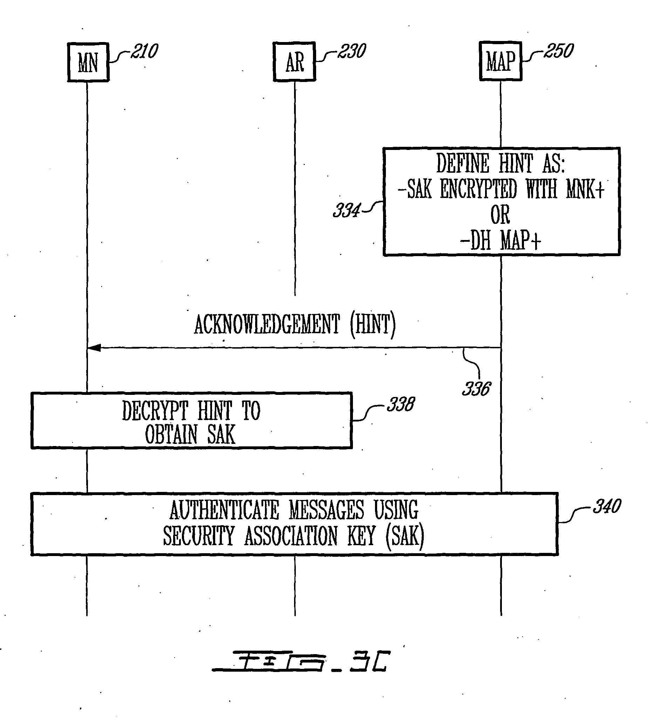

An aspect of the preferred embodiment of the present invention will now be described by reference to Figures 3a, 3b and 3c which show a sequence diagram of a first exemplary method for authenticating an update message. Though the exemplary method is described with reference to a single MAP 250, the process described herein may apply in a network comprising a plurality of MAPs 250, the process applying independently for each MAP 250. The process starts at 300 when the MN 210 enters a Hierarchical Mobile Internet Protocol version 6 (HMIPv6) network, which is a local network serving the MN 210. Of course, the method of the present invention could also apply in other network types than in the HMIPv6 network. At step 302, the MN 210 receives from the AR 230 a Routing Advertisement message (RtAdv) comprising network prefixes of the AR 230 and of the MAP 250. The MN 210 proceeds at step 304 to generate a LCoA and a RCoA that will enable communication within the local HMIPv6 network. In a preferred embodiment, interface identifiers of the LCoA and of the RCoA are generated using a Public Key of the MN (MNK+), which is of a Cryptographically Generated Address (CGA) type. At step 306, a Crypto-Based Identifier (CBID) is generated by the MN. Generation of the CBID is made as per equation [1]:

CBID = first 128 bits of (hash (MNK+, 64-bit imprint)) [1]

where:

hash is a one-way hashing function; and

64-bit imprint is any 64-bit number selected by the MN 210.

In this exemplary method, the MN 210 uses the interface identifier of the RCoA as the 64-bit imprint for generation of the CBID.

At step 308, the MN 210 sends a Route Solicitation message (RtSol) towards the AR 230, the RtSol comprising the MNK+, the CBID and the LCoA. At step 310, the AR 230 replies to the RtSol with a RtAdv, preferably sent in unicast mode, sent towards the MN 210. The MN 230 verifies the validity of this RtAdv at step 312, and ignores the message at step 314 if the message is found to be invalid. The RtAdv is verified by the MN 210, for example, by authentication of a signature of the AR 230 included in the RtAdv. Responsive to receiving the RtSol, the AR 230 also sends at step 316 a first message towards the MAP 250, called a pre-binding message, which may for example be a Pre-Binding Update (PBU) message. The pre-binding message comprises the MNK+, the LCoA and the CBID received from the MN 210. At step 318, the MAP 250 creates an internal table entry, called a Binding Cache Entry (BCE), and stores the MNK+, the LCoA and the CBID. In the BCE, the LCoA can be used as a first pointer to locate this specific entry within the internal table. The CBID is stored as a first comparison data that may be used later to verify the authenticity of subsequent messages received at the MAP 250 on behalf of the MN 210. At step 320, responsive to having received a valid RtAdv, the MN 210 sends an update message, for example a Binding Update (BU) message or a Local Binding Update (LBU) message, towards the MAP 250. By sending the update message, the MN 210 requests the MAP 250 to bind the LCoA and the RCoA, which are both included in the update message. Optionally, if a Diffie-Hellman (DH) procedure is supported by both the MN 210 and the MAP 250, the update message may also comprise a DH public value of the MN (DHMN+). At step 322, the MAP 250 locates the relevant BCE in its table, using the LCoA received in the update message as a second pointer. It thus finds the BCE comprising a LCoA value equal to the one received in the update message. At step 324, the MAP 250 authenticates the update message, using the interface identifier of the RCoA as a second comparison data. To authenticate the update message, the MAP 250 hashes the interface identifier of the RCoA with the MNK+, and verifies at step 326 that the result matches the CBID already stored in the BCE. Because the MN 210 had earlier used the interface identifier of the RCoA as the 64-bit imprint for generation of the CBID, at step 306, a positive match is normally found at step 326. If however a malicious node has sent an invalid update message, no match is found and the invalid update message is discarded at step 328. At step 330, the MAP 250 binds the LCoA and the RCoA by storing the RCoA in the same BCE. The MAP 250 preferably confirms to the MN 210 that the binding was accepted by sending an acknowledgement message, such as a Binding Acknowledgement (BA) message, at step 336.

Rather than sending the acknowledgement message immediately following the binding event of step 330, the method may optionally continue at step 332, where the MAP 250 generates a Security Association Key (SAK), sometimes also called a shared secret. Various manners of generating the SAK are well-known in the art; the SAK should preferably be of sufficient length to enable message encryption, for example 160 bits long, and be difficult to detect. In a variant of the preferred embodiment, the MAP 250 may generate the SAK using the DHMN+ and a DH private value of the MAP (DHMAP-). Because the SAK should remain known only to the MAP 250 and to the MN 210, the MAP 250 preferably does not send the SAK in any message towards the MN 210. Instead, it may send a Hint, that is, information that is sufficient for the MN 210 to compute a copy of the SAK. In an exemplary embodiment of the present invention, the Hint may be calculated by the MAP 250 by encrypting the SAK with the MNK+, at step 334. If the DH procedure is supported, the Hint may alternatively be set equal to a DH public value of the MAP (DHMAP+). The MAP 250 sends the acknowledgement message, comprising the Hint, towards the MN 210, at step 336. At step 338, the MN 210 decrypts the Hint. Decrypting may be effectuated by use of a private key of the MN (MNK-). If the DH procedure is supported, meaning that the Hint is equal to the DHMAP+, decrypting the Hint comprises calculating the SAK by use of the DHMAP+ and of a DH private value of the MN (DHMN-). At step 340, the MAP 250 and the MN 210 use the SAK to authenticate subsequent messages, such as subsequent update messages, BU messages, LBU messages, BA messages, and the like.

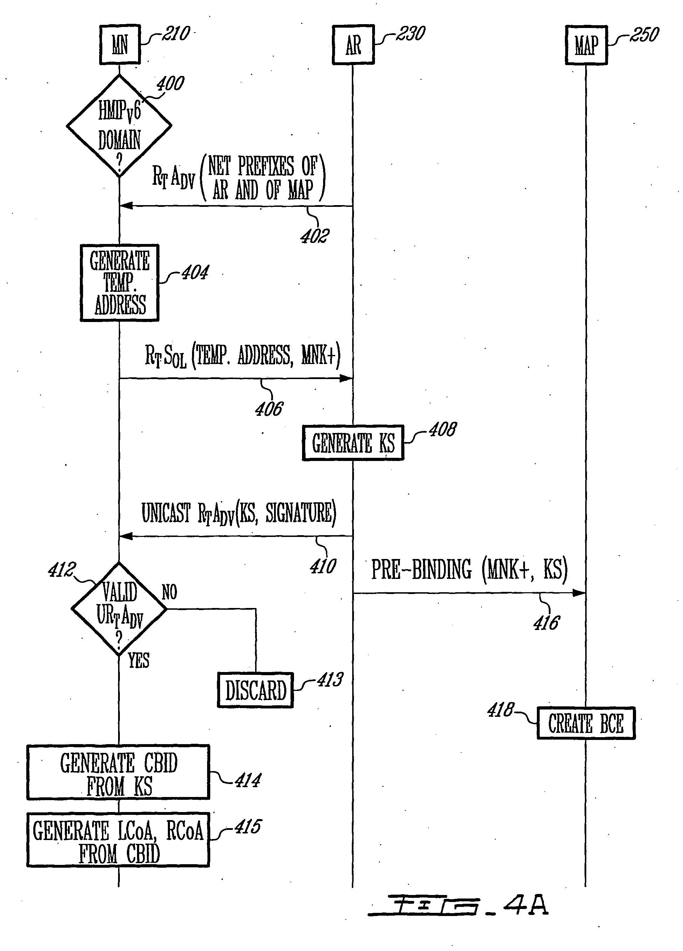

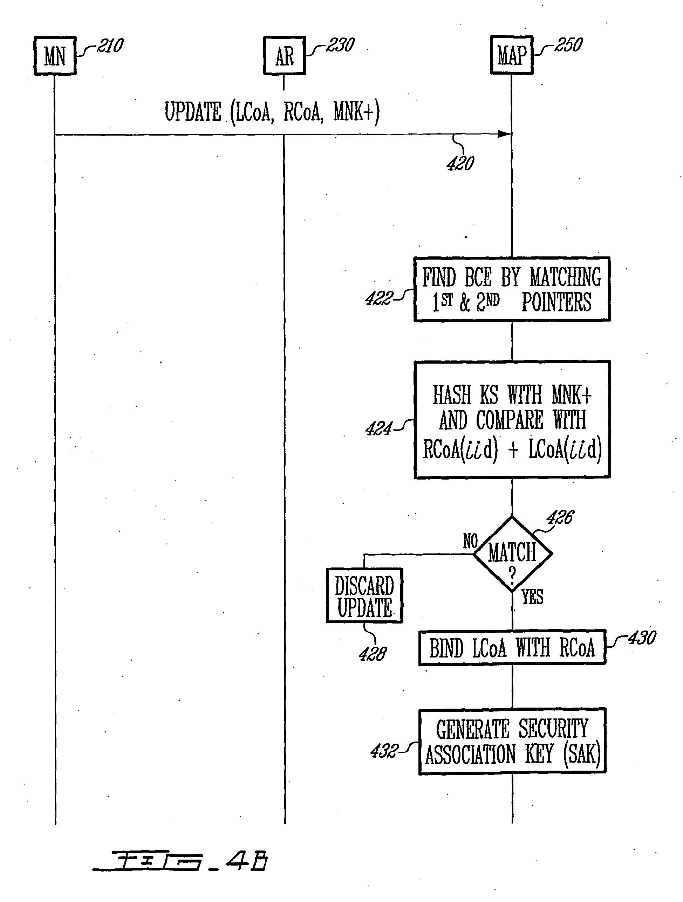

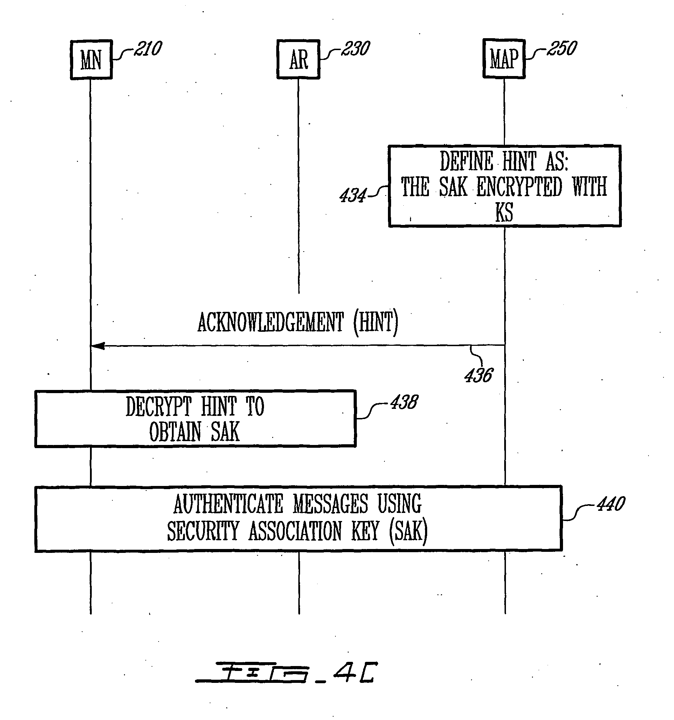

Another aspect of the preferred embodiment of the present invention will now be described by reference to Figures 4a, 4b and 4c which show a sequence diagram of a second exemplary method for authenticating an update message. The process starts at 400 when the MN 210 enters a HMIPv6 network, which is a local network serving the MN 210. At step 402, the MN 210 receives from the AR 230 a RtAdv comprising network prefixes of the AR 230 and of the MAP 250. The MN 210 proceeds at step 404 to generate a temporary address that will enable communication with the AR 230 until a LCoA and a RCoA are generated, later on. At step 406, the MN 210 sends a Route Solicitation message (RtSol) towards the AR 230, the RtSol comprising the MNK+ and the temporary address. The AR 230 generates a Key secret (Ks) at step 408; the Ks being generated in any manner well-known in the art, but being preferably at least 64 bits long. At step 410, the AR 230 replies to the RtSol with a RtAdv, preferably sent in unicast mode, sent towards the MN 210 by use of the temporary address. This RtAdv comprises the Ks and, preferably, a signature. The MN 230 verifies the signature of this RtAdv at step 412, and ignores the message at step 413 if the message is found to be invalid. If this RtAdv is valid, the MN 210 generates, at step 414, a CBID wherein the first 64 bits of the Ks are used as the 64-bit imprint in equation [1]. At step 415, one 64-bit half of the 128-bit CBID is used as an interface identifier for generating the LCoA and another half of the CBID is used as an interface identifier for generating the RCoA. Network prefixes of the AR 230 and of the AR 250, received in either or both of the RtAdv and the unicast RtAdv, are also used, respectively, to generate the LCoA and the RCoA.

Having sent the RtAdv at step 410, the AR 230 also sends a pre-binding message, which may be for example a PBU message, at step 416, towards the MAP 250. The pre-binding message comprises the MNK+ received from the MN 210 as well as the Ks. At step 418, the MAP 250 creates a BCE, and stores the MNK+ and the Ks. In the BCE, the MNK+ can be used as a first pointer to locate this specific entry within the internal table. The Ks is stored as a first comparison data that may be used later to verify the authenticity of subsequent messages received at the MAP 250 on behalf of the MN 210. At step 420, after having generated the LCoA and the RCoA, the MN 210 sends an update message, for example a BU message or a LBU message, towards the MAP 250. By sending the update message, the MN 210 requests the MAP 250 to bind the LCoA and the RCoA, which are both included in the update message along with the MNK+. At step 422, the MAP 250 locates the relevant BCE in its table, using the MNK+ received in the update message as a second pointer. It thus finds the BCE comprising a MNK+ value equal to the one received in the update message. At step 424, the MAP 250 authenticates the update message, using the interface identifiers of the LCoA and of the RCoA as a second comparison data. The MAP 250 hashes the Ks with the MNK+, and verifies at step 426 that the result matches the interface identifiers of the LCoA and of the RCoA. Because the MN 210 had earlier used the Ks as the 64-bit imprint for generation of the CBID at step 414, and in turn used the CBID to define the interface identifiers at step 415, a positive match is normally found at step 426. If however a malicious node has sent an invalid update message, no match is found and the invalid update message is discarded at step 428. At step 430, the MAP 250 binds the LCoA and the RCoA by storing these two addresses in the BCE. The MAP 250 preferably confirms to the MN 210 that the binding was accepted by sending an acknowledgement message, for example a BA message, at step 436.

Rather than sending the acknowledgement message immediately following the binding event of step 430, the method may optionally continue at step 432, where the MAP 250 generates a SAK. The MAP 250 generates a Hint, which may be used by the MN 210 to compute a copy of the SAK, by encrypting the SAK with the Ks, at step 434. The MAP 250 sends the acknowledgement message, comprising the Hint, towards the MN 210, at step 436. At step 438; the MN 210 decrypts the Hint by use of the Ks. At step 440, the MAP 250 and the MN 210 use the SAK to authenticate subsequent messages, such as subsequent BU, LBU and BA messages.

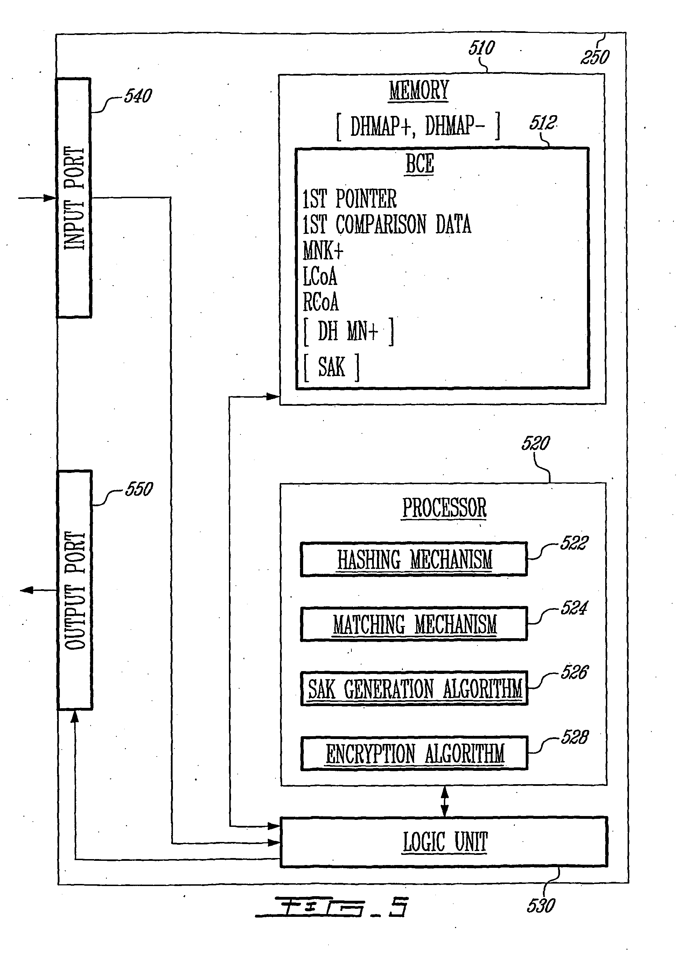

An exemplary construction of a Mobility Anchor Point (MAP) built according to the present invention, capable of authenticating updates from MNs, and used in the preceding figures, will now be described by reference to Figure 5. The MAP 250 comprises a Memory 510, a Processor 520, a Logic Unit 530, and an Input Port 540. In a preferred embodiment, the MAP 250 also comprises an Output Port 550. The MAP 250 may also comprise other elements, as is well known in the art.

The Memory 510 comprises a table with several table entries 512, which may be BCEs. At least one table entry 512 is allocated for each MN 210 for which binding of a LCoA with a RCoA is requested. In each table entry 512, the Memory 510 stores a first pointer, a first comparison data, a MNK+, the LCoA, and the RCoA. The Memory is capable of scanning through its table to locate a specific table entry by use of a value equal to the first pointer. The Memory 510 may optionally comprise DH values of the MAP 250 itself called DHMAP+ and DHMAP-, and further store a DHMN+ and a SAK in the BCE. Depending on the alternative method used to authenticate the MN 210, the first pointer may consist of, for example, the LCoA or the MNK+. The first comparison data may comprise, for example, a CBID or a Ks.

The Input Port 540 receives pre-binding messages from a local network, generally from ARs 230, and update messages from the MNs 210. The Output Port 550 may be used to send acknowledgements towards the MNs 210. The Input Port 540 and Output Port 550 may also receive and send numerous other messages within the local HMIPv6 network as well as through external networks 260, as is well known in the art.

The Processor 520 comprises a hashing mechanism 522 for hashing a first data with the MNK+ and for producing a result, and a matching mechanism 524 for comparing the result of hashing with a second data and for producing a matching outcome. The Pr ocessor 520 optionally comprises a SAK generation algorithm 526, and an encryption algorithm 528 for calculating a Hint based on the SAK. The Processor 520 also supports other functions related to routing and addressing, as are well-known in the art.

The Logic Unit 530 takes decisions regarding the authenticity of update messages, based on matching outcomes received from the Processor 520. It also decides when to create table entries 512 in the Memory 510, and orders the Memory 510 to store both the RCoA with the LCoA of a same MN in a same table entry 512, thereby binding these two addresses.

When the Input Port 540 receives a pre-binding message, the Logic Unit 530 requests that the Memory 510 allocates a table entry 512 for the MN 210 identified in the pre-binding message. Information elements received in the pre-binding message, comprising at least the first pointer, the first comparison data and the MNK+, are stored in the table entry 512. The Input Port 540 later receives an update message comprising at least a second pointer, a second comparison data, the LCoA and the RCoA. The update message may further comprise the MNK+, or a DHMN+, or both. The Logic Unit 530 requests the Memory 510 to scan through its table entries 512 to find the proper table entry 512 comprising the first pointer equal to the second pointer. When the proper table entry 512 for the MN 210 is found, the Logic Unit 530 requests that the Processor 520 hashes one of the first or second comparison data with the MNK+. In one embodiment, the first comparison data is the CBID and the second comparison data is an interface identifier of the RCoA; the Processor 520 hashes the interface identifier of the RCoA with the MNK+ and produces a result of the hashing. It then checks for a match between the result and the CBID. In an alternate embodiment, the first comparison data is the Ks and the second comparison data comprises interface identifiers of both the RCoA and LCoA; the Processor 520 hashes the first 64 bits of the Ks with the MNK+ and produces a result of the hashing. It then checks for a match between the result and the interface identifiers of the RCoA and LCoA. In either case, the Logic Unit 530 considers the matching outcome provided by the Processor 520. If the matching outcome is negative, the update message was from a malicious node, and the Logic Unit 530 simply discards the message. If the matching outcome is positive; the update message is successfully authenticated and the Logic Unit 530 requests that the Memory 510 stores both the RCoA and the LCoA in the table entry 512. In a preferred embodiment, the Logic Unit 530 requests the Output Port 550 to send an acknowledgement message towards the MN 210.

Optionally, after having requested the Memory 510 to store both the RCoA and the LCoA in the table entry 512, the Logic Unit 530 may request that the Processor 520 generates the SAK and the Hint. The Processor 520 may generate the SAK using any well-known mechanism for generating shared secrets, and then use the MNK+ to further encrypt the SAK, thereby producing the Hint. Alternatively, the Processor 520 may generate the SAK from the DHMN+ with the DHMAP-, and set the Hint equal to the DHMAP+. In these alternative options, the Logic Unit 530 requests the Memory 510 to store the SAK in the table entry 512, and then requests the Output Port 550 to send the acknowledgement towards the MN 210, the acknowledgement comprising the Hint.

Although several aspects of the preferred embodiments of the method and of the Mobility Anchor Point of the present invention have been illustrated in the accompanying Drawings and described in the foregoing Detailed Description, it will be understood that the invention is not limited to the embodiments disclosed, but is capable of numerous rearrangements, modifications and substitutions without departing from the scope of the invention as set forth and defined by the following claims.

## Claims

1. A method of authenticating an update message received at a Mobility Anchor Point (MAP) from a Mobile Node (MN) in a network, the method comprising the steps of:
receiving at the MAP from the network a pre-binding message comprising a Public Key of the MN (MNK+), a first pointer and a first comparison data;
creating in the MAP a table entry for storing the MNK+, the first pointer and the first comparison data;
receiving at the MAP from the MN the update message comprising Local Care-of Address (LCoA) as a second pointer and a Regional Care-of a Address (RCoA) as a second comparison date;
locating in the MAP the table entry by finding the first pointer equal to the second pointer;
hashing in the MAP one of the first and second comparison data with the MNK+;
comparing in the MAP a result of the hashing with the other one of the first and second comparison data; and
if the step of comparing is positive, storing the LCoA and the RCoA in the table entry,

2. The method of claim 1, further comprising the step of:
after storing the LCoA and the RCoA in the table entry, sending from the MAP towards the MN an acknowledgement message.

3. The method of claim 2, further comprising the steps of:
generating in the MAP a security association key;
defining in the MAP a hint based on the security association key;
sending the hint in the acknowledgement message; and
using the security association key to authenticate subsequent messages exchanged between the MN and the MAP.

4. The method of claim 3, wherein:
defining the hint comprises encrypting the security association key; and
the security association key is used in unencrypted form for authenticating subsequent messages.

5. The method of claim 3, wherein:
generating in the MAP the security association key comprises generating a shared secret.

6. The method of claim 3, wherein:
subsequent messages authenticated by use of the security association key comprise subsequent update messages and acknowledgement messages.

7. The method of claim 3, wherein:
the update message further comprises a Diffie Hellman (DH) public value of the MN (DHMN+);
the security association key is computed in the MAP using the DHMN+ and a DH private value of the MAP (DHMAP-); and
defining the hint comprises defining a DH public value of the MAP (DHMAP+) corresponding to the DHMAP-.

8. The method of claim 7, wherein:
the MN computes the security association key using the DHMAP+ and a DH private value of the MN (DHMN-) corresponding to the DHMN+.

9. The method of claim 1, wherein:
the MNK+ is of a Cryptographically Generated Address (CGA) type,

10. The method of claim 1, wherein:
the network is a Hierarchical Mobile Internet Protocol version 6 (HMIPv6) network.

11. The method of claim 10, wherein:
receiving at the MAP from the network the pre-binding message comprises receiving the pre-binding message from an Access Router (AR).

12. The method of claim 11, wherein:
the AR sends the pre-binding message responsive to receiving a route solicitation message from the MN, the route solicitation message comprising the first pointer and the first comparison data.

13. The method of claim 12, wherein:
the MN calculates the first pointer responsive to receiving a routing advertisement from the AR; and
the MN subsequently sends the route solicitation to the AR.

14. The method of claim 13, wherein:
the first pointer is the LCoA calculated by the MN using a network prefix of the AR included in the routing advertisement; and
the MN further calculates the RCoA using a network prefix of the MAP included in the routing advertisement.

15. The method of claim 1, wherein:
the table entry is a Binding Cache Entry (BCE).

16. The method of claim 1, wherein:
the first pointer is the LCoA;
the first comparison data is a Crypto-Based Identifier (CBID);
the second pointer is the LCoA;
the second comparison data is an interface identifier of the RCoA;
hashing in the MAP one of the first and second comparison data comprises hashing the interface identifier of the RCoA; and
comparing in the MAP the result of the hashing with the other one of the first and second comparison data comprises comparing the result with the CBID.

17. The method of claim 1, wherein:
the first pointer is the MNK+;
the first comparison data is a Key secret (Ks) ;
the second pointer is the MNK+;
the second comparison data comprises interface identifiers of the LCoA and of the RCoA;
hashing in the MAP one of the first and second comparison data comprises hashing at least a part of the Ks; and
comparing in the MAP the result of the hashing with the other one of the first and second comparison data comprises comparing the result with the interface identifiers of the LCoA and of the RCoA.

18. The method of claim 17, wherein:
hashing a least a part of the Ks comprises hashing a 64-bit portion of the Ks.

19. The method of claim 17, wherein:
an Access Router (AR) generates the Ks and sends the pre-binding message towards the MAP.

20. The method of claim 17, further comprising the steps of:
generating in the MAP a security association key;
defining in the MAP a hint based on the security association key;
sending from the MAP towards the MN an acknowledgement message comprising the hint; and
using the security association key to authenticate subsequent messages exchanged between the MN and the MAP

21. The method of claim 20 wherein:
the security association key is a long term shared secret.

22. The method of claim 20, wherein:
defining the hint comprises encrypting the security association key by use of the Ks.

23. A Mobility Anchor Point (MAP) for authenticating an update message related to a Mobile Node (MN), comprising:
an input port for receiving a pre-binding message related to the MN, the pre-binding message comprising a Public Key of the MN (MNK+), a first pointer and a first comparison data;
the input port for receiving the update message, the update message comprising a Local Care-of Address (LCoA) as a second pointer and a Regional Care-of Address (RCoA) as a second comparison data;
a memory having a table for allocating a table entry for the MN, the table entry capable of storing the MNK+, the first pointer, the first comparison data, the LCoA and the RCoA;
a processor comprising a hashing mechanism for hashing one the first or second comparison data with the MNK+ and producing a result of the hashing;
the processor comprising a matching mechanism for comparing the result with the other one of the first or second comparison data and producing a matching outcome; and
a logic unit for requesting, responsive to the input port receiving the pre-binding message, that the memory allocates the table entry for the MN;
the logic unit for requesting, responsive to the input port receiving the update message, that the memory scans the table to locate the table entry for the MN by finding the one table entry wherein the first pointer is equal to the second pointer;
the logic unit for requesting that the processor hashes one of the first or second comparison data and that the processor produces a matching outcome; and
the logic unit for requesting that the memory stores the LCoA and the RCoA in the table entry for the MN, if the matching outcome is positive.

24. The Mobility Anchor Point of claim 23, further comprising:
an output port for sending an acknowledgement message towards the MN.

25. The Mobility Anchor Point of claim 24, wherein:
the processor further comprises a security association key generation algorithm for producing a security association key and an encryption algorithm for calculating a hint based on the security association key;
the table entry in the memory is further for storing the security association key; and
the acknowledgement message further comprises the hint.

26. The Mobility Anchor Point of claim 25, wherein:
calculating the hint comprises encrypting the security association key with the MNK+.

27. The Mobility Anchor Point of claim 25, wherein:
the memory is further for storing a DH public value of the MAP (DHMAP+) and a DH private value of the MAP (DHMAP-);
the table entry in the memory is further for storing a Diffie-Hellman (DH) public value of the MN (DHMN+) received in the update message;
producing the security association key comprises using the DHMAP- and the DHMN+; and
the hint comprises the DHMAP+,

28. The Mobility Anchor Point of claim 23, wherein:
the first pointer is the MNK+;
the first comparison data is a Key secret (Ks) ;
the second pointer is the MNK+;
the second comparison data comprises interface identifiers of the LCoA and of the RCoA;
the hashing mechanism is for hashing at least a part of the Ks with the MNK+; and
the matching mechanism is for comparing the result with the interface identifiers of the LCoA and of the RCoA.

29. The Mobility Anchor Point of claim 23, wherein:
the first pointer is the LCoA;
the first comparison data is a Crypto-Based Identifier (CBID);
the second pointer is the LCoA;
the second comparison data is an interface identifier of the RCoA:
the hashing mechanism is for hashing the interface identifier of the RCoA; and
the matching mechanism is for comparing the result with the CBID.

## Patentansprüche

1. Verfahren zur Authentifizierung einer Aktualisierungsnachricht, die an einem Mobilitätsankerpunkt (MAP) von einem Mobilknoten (MN) in einem Netz empfangen wird, wobei das Verfahren die folgenden Schritte umfasst:
Empfangen am MAP aus dem Netz eine Prebinding-Nachricht, die einen öffentlichen Schlüssel des MN (MNK+), einen ersten Zeiger und erste Vergleichsdaten umfasst;
Erstellen im MAP eines Tabelleneintrags zum Speichern des MNK+, des ersten Zeigers und der ersten Vergleichsdaten;
Empfangen am MAP vom MN der Aktualisierungsnachricht, die eine lokale Care-of-Adresse (LCoA) als einen zweiten Zeiger und eine regionale Care-of-Adresse (RCoA) als zweite Vergleichsdaten umfasst;
Lokalisieren im MAP des Tabelleneintrags durch Finden des ersten Zeigers gleich dem zweiten Zeiger;
Hash-Codieren im MAP einen der ersten und zweiten Vergleichsdaten mit dem MNK+;
Vergleichen im MAP eines Ergebnisses des Hash-Codierens mit den anderen der ersten und zweiten Vergleichsdaten; und
Speichern, wenn der Schritt des Vergleichens positiv ist, der LCoA und der RCoA im Tabelleneintrag.

2. Verfahren nach Anspruch 1, ferner umfassend den folgenden Schritt:
Senden nach dem Speichern der LCoA und der RCoA im Tabelleneintrag einer Bestätigungsnachricht vom MAP an den MN.

3. Verfahren nach Anspruch 2, ferner umfassend den folgenden Schritt:
Generieren im MAP eines Sicherheitsvereinbarungsschlüssels;
Definieren im MAP eines Hinweises auf der Basis des Sicherheitsvereinbarungsschlüssels;
Senden des Hinweises in der Bestätigungsnachricht; und
Verwenden des Sicherheitsvereinbarungsschlüssels zum Authentifizieren von nachfolgende Nachrichten, die zwischen dem MN und dem MAP ausgetauscht werden.

4. Verfahren nach Anspruch 3, wobei:
das Definieren des Hinweises ein Verschlüsseln des Sicherheitsvereinbarungsschlüssels umfasst; und
der Sicherheitsvereinbarungsschlüssel zum Authentifizieren nachfolgender Nachrichten in unverschlüsselter Form verwendet wird.

5. Verfahren nach Anspruch 3, wobei:
das Generieren im MAP des Sicherheitsvereinbarungsschlüssels ein Generieren eines geteilten Geheimnisses umfasst.

6. Verfahren nach Anspruch 3, wobei:
nachfolgende Nachrichten, die durch die Verwendung des Sicherheitsvereinbarungsschlüssels authentifiziert werden, nachfolgende Aktualisierungsnachrichten und Bestätigungsnachrichten umfassen.

7. Verfahren nach Anspruch 3, wobei:
die Aktualisierungsnachricht ferner einen öffentlichen Diffie-Hellmann (DH)-Wert des MN (DHMN+) umfasst;
der Sicherheitsvereinbarungsschlüssel im MAP unter Verwendung des DHMN+ und eines privaten DH-Wertes des MAP (DHMAP-) berechnet wird; und
das Definieren des Hinweises ein Definieren eines öffentlichen DH-Wertes des MAP (DHMAP+) umfasst, der dem DHMAP- entspricht.

8. Verfahren nach Anspruch 7, wobei:
der MN den Sicherheitsvereinbarungsschlüssel unter Verwendung des DHMAP+ und eines privaten DH-Wertes des MN (DHMN-) berechnet, der dem DHMN+ entspricht.

9. Verfahren nach Anspruch 1, wobei:
der MNK+ vom Typ einer kryptografisch generierten Adresse (CGA) ist.

10. Verfahren nach Anspruch 1, wobei:
das Netz ein Hierarchical Mobile Internet Protocol Version 6 (HMIPv6)-Netz ist.

11. Verfahren nach Anspruch 10, wobei:
das Empfangen am MAP aus dem Netz der Prebinding-Nachricht ein Empfangen der Prebinding -Nachricht von einem Zugangsrouter (AR) umfasst.

12. Verfahren nach Anspruch 11, wobei:
der AR die Prebinding-Nachricht als Reaktion auf den Empfang einer Leitwegabrufnachricht vom MN sendet, wobei die Leitwegabrufnachricht den ersten Zeiger und die ersten Vergleichsdaten umfasst.

13. Verfahren nach Anspruch 12, wobei:
der MN den ersten Zeiger als Reaktion auf den Empfang einer Leitweglenkungsankündigung vom AR berechnet; und
der MN anschließend den Leitwegabruf an den AR sendet.

14. Verfahren nach Anspruch 13, wobei:
der erste Zeiger die LCoA ist, die durch den MN unter Verwendung eines Netzpräfixes des AR berechnet wird, das in der Leitweglenkungsankündigung enthalten ist; und
der MN ferner die RCoA unter Verwendung eines Netzpräfixes des MAP berechnet, das in der Leitweglenkungsankündigung enthalten ist.

15. Verfahren nach Anspruch 1, wobei:
der Tabelleneintrag ein Binding Cache-Eintrag (BCE) ist.

16. Verfahren nach Anspruch 1, wobei:
der erste Zeiger die LCoA ist;
es sich bei den ersten Vergleichsdaten um eine schlüsselbasierte Kennung (CBID) handelt;
der zweite Zeiger die LCoA ist;
es sich bei den zweiten Vergleichsdaten um eine Schnittstellenkennung der RCoA handelt;
das Hash-Codieren im MAP welcher der ersten und zweiten Vergleichsdaten ein Hash-Codieren der Schnittstellenkennung der RCoA umfasst; und
das Vergleichen im MAP des Ergebnisses des Hash-Codierens mit den anderen der ersten und zweiten Vergleichsdaten ein Vergleichen des Ergebnisses mit der CBID umfasst.

17. Verfahren nach Anspruch 1, wobei:
der erste Zeiger der MNK+ ist;
es sich bei den ersten Vergleichsdaten um ein Schlüsselgeheimnis (Ks) handelt;
der zweite Zeiger der MNK+ ist;
die zweiten Vergleichsdaten Schnittstellenkennungen der LCoA und der RCoA umfassen;
das Hash-Codieren im MAP welcher der ersten und zweiten Vergleichsdaten ein Hash-Codieren wenigstens eines Teils des Ks umfasst; und
das Vergleichen im MAP des Ergebnisses des Hash-Codierens mit den anderen der ersten und zweiten Vergleichsdaten ein Vergleichen des Ergebnisses mit den Schnittstellenkennungen der LCoA und der RCoA umfasst.

18. Verfahren nach Anspruch 17, wobei:
das Hash-Codieren wenigstens eines Teils des Ks ein Hash-Codieren eines 64-bit-Abschnitts des Ks umfasst.

19. Verfahren nach Anspruch 17, wobei:
ein Zugangsrouter (AR) den Ks generiert und die Prebinding-Nachricht an den MAP sendet.

20. Verfahren nach Anspruch 17, ferner umfassend die folgenden Schritte:
Generieren im MAP eines Sicherheitsvereinbarungsschlüssels;
Definieren im MAP eines Hinweises auf der Basis des Sicherheitsvereinbarungsschlüssels;
Senden vom MAP an den MN einer Bestätigungsnachricht, die den Hinweis umfasst; und
Verwenden des Sicherheitsvereinbarungsschlüssels zum Authentifizieren von nachfolgenden Nachrichten, die zwischen dem MN und dem MAP ausgetauscht werden.

21. Verfahren nach Anspruch 20, wobei:
der Sicherheitsvereinbarungsschlüssel ein geteiltes Langzeitgeheimnis ist.

22. Verfahren nach Anspruch 20, wobei:
das Definieren des Hinweises ein Verschlüsseln des Sicherheitsvereinbarungsschlüssels durch die Verwendung des Ks umfasst.

23. Mobilitätsankerpunkt (MAP) zum Authentifizieren einer Aktualisierungsnachricht in Bezug auf einen Mobilknoten (MN), umfassend:
einen Eingangsport zum Empfangen einer Prebinding-Nachricht in Bezug auf den MN, wobei die Prebinding-Nachricht einen öffentlichen Schlüssel des MN (MNK+), einen ersten Zeiger und erste Vergleichsdaten umfasst;
der Eingangsport zum Empfangen der Aktualisierungsnachricht, wobei die Aktualisierungsnachricht eine lokale Care-of-Adresse (LCoA) als einen zweiten Zeiger und eine regionale Care-of-Adresse (RCoA) als zweite Vergleichsdaten umfasst;
einen Speicher mit einer Tabelle zum Zuweisen eines Tabelleneintrags für den MN, wobei der Tabelleneintrag den MNK+, den ersten Zeiger, die ersten Vergleichsdaten, die LCoA und die RCoA speichern kann;
einen Prozessor, der einen Hash-Codierungsmechanismus zum Hash-Codieren welcher der ersten oder zweiten Vergleichsdaten mit dem MNK+ und Erzeugen eines Ergebnisses des Hash-Codierens umfasst;
der Prozessor einen Vergleichsmechanismus zum Vergleichen des Ergebnisses mit dem anderen von den ersten oder zweiten Vergleichsdaten und Erzeugen eines Vergleichsergebnisses umfasst; und
eine Logikeinheit zum Anfordern, dass der Speicher den Tabelleneintrag für den MN zuweist, als Reaktion darauf, dass der Eingangsport die Prebinding-Nachricht empfängt;
die Logikeinheit zum Anfordern, dass der Speicher die Tabelle scannt, um den Tabelleneintrag für den MN durch Finden des einen Tabelleneintrags, bei dem der erste Zeiger gleich dem zweiten Zeiger ist, zu lokalisieren, als Reaktion darauf, dass der Eingangsport die Aktualisierungsnachricht empfängt;
die Logikeinheit zum Anfordern, dass der Prozessor welcher der ersten oder zweiten Vergleichsdaten hash-codiert und dass der Prozessor ein Vergleichsergebnis erzeugt; und
die Logikeinheit zum Anfordern, dass der Speicher die RCoA im Tabelleneintrag für den MN speichert, wenn das Vergleichsergebnis positiv ist.

24. Mobilitätsankerpunkt nach Anspruch 23, ferner umfassend:
einen Ausgangsport zum Senden einer Bestätigungsnachricht an den MN.

25. Mobilitätsankerpunkt nach Anspruch 24, wobei;
der Prozessor ferner einen Sicherheitsvereinbarungsschlüssel-Generierungsalgorithmus zum Erzeugen eines Sicherheitsvereinbarungsschlüssels und einen Verschlüsselungsalgorithmus zum Berechnen eines Hinweises auf der Basis des Sicherheitsvereinbarungsschlüssels umfasst;
der Tabelleneintrag im Speicher ferner zum Speichern des Sicherheitsvereinbarungsschlüssels ist; und
die Bestätigungsnachricht ferner den Hinweis umfasst.

26. Mobilitätsankerpunkt nach Anspruch 25, wobei:
das Berechnen des Hinweises ein Verschlüsseln des Sicherheitsvereinbarungsschlüssels mit dem MNK+ umfasst.

27. Mobilitätsankerpunkt nach Anspruch 25, wobei:
der Speicher ferner zum Speichern eines öffentlichen DH-Wertes des MAP (DHMAP+) und eines privaten DH-Wertes des MAP (DHMAP-) ist;
der Tabelleneintrag im Speicher ferner zum Speichern eines öffentlichen Diffie-Hellmann (DH)-Wertes des MN (DHMN+) ist, der in der Aktualisierungsnachricht empfangen wird;
das Erzeugen des Sicherheitsvereinbarungsschlüssels ein Verwenden des DHMAP- und des DHMAP+ umfasst; und
der Hinweis den DHMAP+ umfasst.

28. Mobilitätsankerpunkt nach Anspruch 23, wobei:
der erste Zeiger der MNK+ ist;
es sich bei den ersten Vergleichsdaten um ein Schlüsselgeheimnis (Ks) handelt;
der zweite Zeiger der MNK+ ist;
die zweiten Vergleichsdaten Schnittstellenkennungen der LCoA und der RCoA umfassen;
der Hash-Codierungsmechanismus zum Hash-Codieren wenigstens eines Teils des Ks mit dem MNK+ ist; und
der Vergleichsmechanismus zum Vergleichen des Ergebnisses mit den Schnittstellenkennungen der LCoA und der RCoA ist.

29. Mobilitätsankerpunkt nach Anspruch 23, wobei:
der erste Zeiger die LCoA ist;
es sich bei den ersten Vergleichsdaten um eine schlüsselbasierte Kennung (CBID) handelt;
der zweite Zeiger die LCoA ist;
es sich bei den zweiten Vergleichsdaten um eine Schnittstellenkennung der RCoA handelt;
der Hash-Codierungsmechanismus zum Hash-Codieren der Schnittstellenkennung der RCoA ist; und
der Vergleichsmechanismus zum Vergleichen des Ergebnisses mit der CBID ist.

## Revendications

1. Procédé d'authentification d'un message de mise à jour reçu au niveau d'un point d'ancrage de mobilité (MAP) en provenance d'un noeud mobile (MN) dans un réseau, le procédé comprenant les étapes consistant à ;
recevoir au niveau du MAP en provenance du réseau un message de pré-association comprenant une clé publique du MN (MNK+), un premier pointeur et une première donnée de comparaison ;
créer dans le MAP une entrée de table pour mémoriser la MNK+, le premier pointeur et la première donnée de comparaison ;
recevoir au niveau du MAP en provenance du MN le message de mise à jour comprenant une adresse d'entretien locale (LCoA) comme un second pointeur ; et une adresse d'entretien régionale (RCoA) comme une seconde donnée de comparaison ;
localiser dans le MAP l'entrée de table en trouvant le premier pointeur égal au second pointeur ;
hacher dans le MAP une de la première et la seconde données de comparaison avec la MNs+ ;
comparer dans le MAP un résultat du hachage avec l'autre de la première et la seconde données de comparaison ; et
si l'étape de comparaison est positive, mémoriser la LCoA et la RCoA dans l'entrée de table.

2. Procédé selon la revendication 2, comprenant en outre les étapes consistant à :
après la mémorisation de la LCoA et la RCoA dans l'entrée de table, envoyer depuis le MAP vers le MN un message d'accusé de réception.

3. Procédé selon la revendication 2, comprenant en outre les étapes consistant à :
générer dans le MAP une clé d'association de sécurité ;
définir dans le MAP un indice basé sur la clé d'association de sécurité ;
envoyer l'indice dans le message d'accusé de réception ; et
utiliser la clé d'association de sécurité afin d'authentifier les messages subséquents échangés entre le MN et le MAP.

4. Procédé selon la revendication 3, dans lequel :
la définition de l'indice comprend de crypter la clé d'association de sécurité ; et
la clé d'association de sécurité est utilisée sous forme non cryptée pour authentifier les messages subséquents.

5. Procédé selon la revendication 3, dans lequel :
la génération dans le MAP de la clé d'association de sécurité comprend de générer un secret partagé.

6. Procédé selon la revendication 3, dans lequel :
les messages subséquents authentifiés en utilisant la clé d'association de sécurité comprennent des messages de mise à jour subséquents et des messages d'accusé de réception.

7. Procédé selon la revendication3, dans lequel :
le message de mise à jour comprend en outre une valeur publique de Diffle-Hellman (DH) du MN (DHMN+) ;
la clé d'association de sécurité est calculée informatiquement dans le MAP en utilisant la DHMN+ et une valeur privée DH du MAP (DHMAP-) ; et
la définition de l'indice comprend de définir une valeur publique DH du MAP (DHMAP+) correspondant à la DHMAP-.

8. Procédé selon la revendication 7, dans lequel
le MN calcule informatiquement la clé d'association de sécurité en utilisant la DHMAP+ et une valeur privée DH du MN (DHMN-) correspondant à la DHMN+.

9. Procédé selon la revendication 1, dans lequel
la MNK+ est un type d'adresse généré cryptographiquement (CGA).

10. Procédé selon la revendication 1, dans lequel :
le réseau est un réseau à protocole Internet mobile hiérarchique, version 6 (HMIPv6).

11. Procédé selon la revendication 10, dans lequel :
la réception au niveau du MAP en provenance du réseau du message de pré-association comprend la réception du message de pré-association en provenance d'un routeur d'accès (AR).

12. Procédé selon la revendication 11, dans lequel ;
le routeur d'accès envoie le message de pré-association en réponse à la réception d'un message de sollicitation de route provenant du MN, le message de sollicitation de route comprenant le premier pointeur et la première donnée de comparaison.

13. Procédé selon la revendication 12, dans lequel :
le MN calcule le premier pointeur en réponse à la réception d'une annonce de routage provenant de l'AR ; et
le MN envoie ensuite la sollicitation de route à l'AR.

14. Procédé selon la revendication 13, dans lequel :
la premier pointeur est la LCoA calculée par le MN en utilisant un préfixe de réseau de l'AR inclus dans l'annonce de routage ; et
le MN calcule en outre la RCoA en utilisant un préfixe de réseau du MAP inclus dans l'annonce de routage.

15. Procédé selon la revendication 1, dans lequel :
l'entrée de table est une entrée d'antémémoire d'association (BCE).

16. Procédé selon la revendication 1, dans lequel :
le premier pointeur est le LCoA ;
la première donnée de comparaison est un identifiant basé sur cryptographie (CBID) ;
le second pointeur est la LCoA ;
la seconde donnée de comparaison est un identifiant d'interface de la RCoA ;
le hachage dans le MAP d'une de la première et la seconde données de comparaison comprend le hachage de l'identifiant d'interface du RCoA ; et
la comparaison dans le MAP du résultat du hachage avec l'autre de la première et la seconde données de comparaison comprend la comparaison du résultat avec le CBID.

17. Procédé selon la revendication 1, dans lequel :
le premier pointeur est la MNK+ ;
la première donnée de comparaison est une clé secrète (Ks) ;
le second pointeur est la MNK+ ;
la seconde donnée de comparaison comprend des identifiants d'interface de la LCoA et la RCoA ;
le hachage dans le MAP d'une de la première et la seconde données de comparaison comprend le hachage d'au moins une partie de la Ks ; et
la comparaison dans le MAP du résultat du hachage avec l'autre de la première et la seconde données de comparaison comprend la comparaison du résultat avec les identifiants d'interface de la LCoA et la RCoA.

18. Procédé selon la revendication 17, dans lequel :
le hachage d'au moins une partie de la Ks comprend le hachage d'une portion à 64 bits de la Ks.

19. Procédé selon la revendication 17, dans lequel :
un routeur d'accès (AR) génère la Ks et envoie le message de pré-association vers le MAP.

20. Procédé selon la revendication 17, comprenant en outre les étapes consistant à :
générer dans le MAP une clé d'association de sécurité ;
définir dans le MAP un indice basé sur la clé d'association de sécurité ;
envoyer du MAP vers le MN un message d'accusé de réception comprenant l'indice ; et
utiliser la clé d'association de sécurité pour authentifier les messages subséquents échangés entre le MN et le MAP.

21. Procédé selon la revendication 20, dans lequel :
la clé d'association de sécurité est une clé partagée à long terme.

22. Procédé selon la revendication 20, dans lequel :
la définition de l'indice comprend le cryptage de la clé d'association de sécurité en utilisant la Ks.

23. Point d'ancrage de mobilité (MAP) pour authentifier un message de mise à jour relatif à un noeud mobile (MN) comprenant :
un port d'entrée pour recevoir un message de pré-association relatif au MN, le message de pré-association comprenant une clé publique du MN (MNK+), un premier pointeur et une première donnée de comparaison ;
le port d'entrée pour recevoir le message de mise à jour, le message de mise à jour comprenant une adresse d'entretien locale (LCoA) comme un second pointeur et une adresse d'entretien régionale (RCoA) comme une seconde donnée de comparaison ;
une mémoire ayant une table pour allouer une entrée de table au MN, l'entrée de table étant capable de mémoriser la MNK+, le premier pointeur, la première donnée de comparaison, la LCoA et la RcoA ;
un processeur comprenant un mécanisme de hachage pour hacher une de la première ou la seconde données de comparaison avec la MNK+ et produisant un résultat du hachage ;
le processeur comprenant un mécanisme de concordance pour comparer le résultat avec l'autre de la première ou la seconde données de comparaison et produisant un résultat concordant ; et
une unité logique pour demander, en réponse à la réception par le port d'entrée du message de pré-association, que la mémoire alloue l'entrée de table au MN ;
l'unité logique demandant, en réponse à la réception du message de mise à jour par le port d'entrée, que la mémoire balaie la table afin de localiser l'entrée de table pour le MN en trouvant l'entrée de table dans laquelle le premier pointeur est égal au second pointeur :
l'unité logique demandant que le processeur hache une de la première ou la seconde données de comparaison et que le processeur produise un résultat concordant ; et
l'unité logique demandant que la mémoire mémorise la LCoA et la RCoA dans l'entrée de table pour le MN, si le résultat concordant est positif.

24. Point d'ancrage de mobilité selon la revendication 23, comprenant en outre :
un port de sortie pour envoyer un message d'accusé de réception vers le MN.

25. Point d'ancrage de mobilité selon la revendication 24, dans lequel :
le processeur comprend en outre un algorithme de génération de clé d'association de sécurité pour produire une clé d'association de sécurité et un algorithme de cryptage pour calculer un indice sur la base de la clé d'association de sécurité ;
l'entrée de table dans la mémoire mémorisant en outre la clé d'association de sécurité ; et
le message d'accusé de réception comprend en outre l'indice.

26. Point d'ancrage de mobilité selon la revendication 25, dans lequel :
le calcul de l'indice comprend le cryptage de la clé d'association de sécurité avec la MNK+.

27. Point d'ancrage de mobilité selon la revendication 25, dans lequel :
la mémoire mémorise en outre une valeur publique DH du MAP (DHMAP+) et une valeur privée DH du MAP (DHMAP-) ;
l'entrée de table dans la mémoire mémorise en outre une valeur publique Diffle-Hellmand (DH) du MN (DHMN+) reçue dans le message de mise à jour ;
la production de la clé d'association de sécurité comprend l'utilisation de la DHMAP- et la DHMN+ ; et
l'indice comprend la DHMAP+.

28. Point d'ancrage de mobilité selon la revendication 23, dans lequel :
le premier pointeur est la MNK+ ;
la première donnée de comparaison est une clé secrète (Ks) ;
le second pointeur est la MNK+ ;
la seconde donnée de comparaison comprend des identifiants d'interface de la LCoA et la RCoA ;
le mécanisme de hachage hache au moins une partie de la Ks avec la MNK+ ; et
le mécanisme de concordance compare le résultat avec les identifiants d'interface de la LCoA et la RCoA.

29. Point d'ancrage de mobilité selon la revendication 23, dans lequel :
le premier pointeur est le LCoA ;
la première donnée de comparaison est un identifiant b asé sur cryptographie (CSTD) ;
le second pointeur est la LCoA ;
la seconde donnée de comparaison est un identifiant d'interface de la RCoA ;
le mécanisme de hachage hache l'identifiant d'interface de la RCoA, ; et
le mécanisme de concordance compare le résultat avec le CBID.
